**Europäisches Patentamt**

**European Patent Office**

**Office européen des brevets**

(19)

(11) Veröffentlichungsnummer : **0 455 285 B1**

(12) # EUROPÄISCHE PATENTSCHRIFT

(45) Veröffentlichungstag der Patentschrift :
27.10.93 Patentblatt 93/43

(51) Int. Cl.⁵ : **B01D 53/14, C01B 17/04**

(21) Anmeldenummer : **91200822.4**

(22) Anmeldetag : **09.04.91**

(54) **Verfahren zum Reinigen eines H2S und CO2 enthaltenden Gases.**

(30) Priorität : **01.05.90 DE 4014018**

(43) Veröffentlichungstag der Anmeldung :
**06.11.91 Patentblatt 91/45**

(45) Bekanntmachung des Hinweises auf die
Patenterteilung :
**27.10.93 Patentblatt 93/43**

(84) Benannte Vertragsstaaten :
**AT BE DE DK ES FR GB GR IT NL SE**

(56) Entgegenhaltungen :
**EP-A- 0 331 228**
**DE-A- 3 735 002**
**US-A- 4 632 819**

(73) Patentinhaber : **METALLGESELLSCHAFT Aktiengesellschaft**
**Postfach 10 15 01, Reuterweg 14**
**D-60015 Frankfurt (DE)**

(72) Erfinder : **Kriebel, Manfred, Dr.**
**Tirolerstrasse 61**
**W-6000 Frankfurt am Main 1 (DE)**
Erfinder : **Grünewald, Gerhard**
**Ph. Wasserburgstr. 17**
**W-6500 Mainz-Gonsenheim (DE)**
Erfinder : **Fischer, Herbert**
**Holzmühlenweg 67**
**W-6304 Lollar (DE)**

**Beschreibung**

Die Erfindung betrifft ein Verfahren zum Reinigen eines brennbare Komponenten sowie Kohlendioxid und Schwefelverbindungen, insbesondere $H_2S$, enthaltenden Gases durch Waschen in einer Waschzone mit einer Waschlösung, die regeneriert und wiederverwendet wird, wobei man die Waschlösung zum Regenerieren entspannt, strippt und in einer Heißregenerierung erhitzt, ein $H_2S$-reiches Abgas aus der Heißregenerierung zu Elementarschwefel und einem $H_2S$-haltigen Restgas aufarbeitet und das Restgas mit Waschlösung in Kontakt bringt.

In der EP-A-0 054 772 ist ein Verfahren dieser Art beschrieben, wobei das der Clausanlage zugeführte Abgas neben $H_2S$ auch erhebliche Mengen an $CO_2$ enthält. Dieses Abgas wird in einer relativ aufwendigen Clausanlage weiterbehandelt, die zwei oder drei katalytische Stufen aufweist. In diesen Stufen wird das Abgas nach der teilweisen Verbrennung des $H_2S$ zu $SO_2$ katalytisch durch die Claus-Reaktion

$$2\ H_2S + SO_2 \dashrightarrow 3\ S + 2\ H_2O$$

möglichst weitgehend zu Elementarschwefel und Wasser umgewandelt. Vor und hinter jeder dieser katalytischen Stufen wird Elementarschwefel aus dem Gasgemisch auskondensiert und abgetrennt. Auf die katalytischen Umsetzungsstufen folgt beim bekannten Verfahren eine Hydrierung, bevor das Abgas zurück in die Gaswäsche geleitet wird.

Diese katalytischen Verfahrensstufen verursachen erhebliche Kosten und haben den Nachteil, daß sie das Anfahren der Anlage aus einem Stillstand heraus aufwendig und zeitraubend machen. Auch besteht die Gefahr, daß die Katalysatoren beim häufigen Anfahren und Abfahren und bei extremen Lastwechseln schnell ihre Aktivität verlieren.

Der Erfindung liegt die Aufgabe zugrunde, die Aufarbeitung des $H_2S$-reichen Abgases aus der Heißregenerierung so durchzuführen, daß das schnelle Anfahren aus dem Stillstand auf einfache Weise geschehen kann und auch häufiger Lastwechsel unproblematisch ist. Erfindungsgemäß gelingt dies beim eingangs genannten Verfahren dadurch, daß man das $H_2S$-reiche Abgas aus der Heißregenerierung in einer Brennkammer mit Sauerstoff, sauerstoffhaltigem Gas oder Luft teilweise verbrennt und in der Brennkammer ein Gasgemisch mit einer Temperatur im Bereich von 1000 bis 2000°C erzeugt, das mindestens 30 Mol-% des der Brennkammer zugeführten Schwefels als Elementarschwefel und die Komponenten $H_2S$ und $SO_2$ im Molverhältnis von 4:1 bis 1:1 enthält, daß man das Gasgemisch bis unter den Taupunkt des Schwefels kühlt, auskondensierenden Elementarschwefel abtrennt, das Gasgemisch auf Temperaturen von 180 bis 280°C erhitzt und direkt einer katalytischen Hydrierung und/oder Hydrolyse unterzieht, wobei der restliche Gehalt an $SO_2$ weitgehend in $H_2S$ umgewandelt wird, und daß man mindestens einen Teil des so behandelten Gases als $H_2S$-haltiges Restgas mit Waschlösung in Kontakt bringt. Das erfindungsgemäße Verfahren ist besonders für die Entschwefelung von Brenngasen geeignet, die man als Brennstoff in einem Gas- und Dampfturbinen-Kraftwerk verwendet.

Beim Verfahren der Erfindung sorgt man dafür, daß das der Brennkammer zugeführte $H_2S$-reiche Abgas hoch mit $H_2S$ angereichert ist. Dadurch wird bereits in der Brennkammer und im unmittelbaren Anschluß daran durch die Reaktion

$$H_2S + \tfrac{1}{2}O_2 = S + H_2O$$

ein hoher Anteil des Schwefelwasserstoffs zu Elementarschwefel umgesetzt. Es kann deshalb auf die Weiterbehandlung des Gasgemisches durch katalytische Umsetzung von $H_2S$ und $SO_2$ entsprechend der Clausreaktion

$$2\ H_2S + SO_2 = 3\ S + 2\ H_2O$$

verzichtet werden. Man nimmt hierbei bewußt eine geringere $H_2S$-Umsetzung in Kauf, was auch einen höheren Bedarf an Hydrierwasserstoff in der Hydrierung zur Folge hat. Die durch eine höhere Hydrierungsrate erforderliche Kühlung des Hydrierkatalysators kann aber beim erfindungsgemäßen Verfahren durch Einspeisen eines kühlenden Gases erreicht werden, mit dem sich auch der fehlende Hydrierwasserstoff zuführen läßt.

Das $H_2S$-haltige Restgas aus der Hydrierung und/oder Hydrolyse kann z.B. zurück zur Waschzone oder aber in die Regenerierung geleitet werden. Eine weitere Möglichkeit besteht darin, dieses Restgas teilweise direkt in die Brennkammer zu leiten, was sich vor allem dann empfiehlt, wenn man der Brennkammer Sauerstoff und ein hoch mit $H_2S$ angereichertes Abgas zuführt.

In der Heißregenerierung entsteht ein $CO_2$-armes Abgas mit einem $CO_2$-Gehalt von höchstens 10 Vol.-% oder noch erheblich weniger, wenn man die beladene Waschlösung aus der Waschzone vor der Heißregenerierung in mindestens zwei Regenerierkolonnen entspannt. In diesem Fall empfiehlt es sich, freigesetztes Gas mindestens zum Teil der vorausgehenden Stufe als Strippgas zuzuführen. Zusätzlich kann man in der Heißregenerierung mit Inertgas strippen.

Das Verfahren ist vor allem dafür gut geeignet, heizwertreiche Gase für ein Gas- und Dampfturbinen-Kraftwerk zu entschwefeln. Solche heizwertreichen Gase können z.B. durch Vergasen fester Brennstoffe in an sich bekannter Weise erzeugt werden.

Für die Gasreinigung eignen sich verschiedenartige, für $H_2S$ selektive Waschlösungen, die an sich bekannt sind, z.B. physikalisch wirkende Waschlösungen wie Methanol, N-Methylpyrrolidon, Methyl-Diethanolamin oder auch Dimethylether von Polyethylenglycol. Die Gaswäsche erfolgt zumeist bei Drücken im Bereich von 5 bis 100 bar und bei den bekannten, für die jeweilige Waschlösung typischen Temperaturen, die im Bereich von -80°C bis +100°C liegen. Bei der Erzeugung des Elementarschwefels arbeitet man bei Drücken von etwa 1 bis 30 bar, wobei die Drücke auch noch darüber liegen können. Es werden Drücke von 1 bis 10 bar bevorzugt.

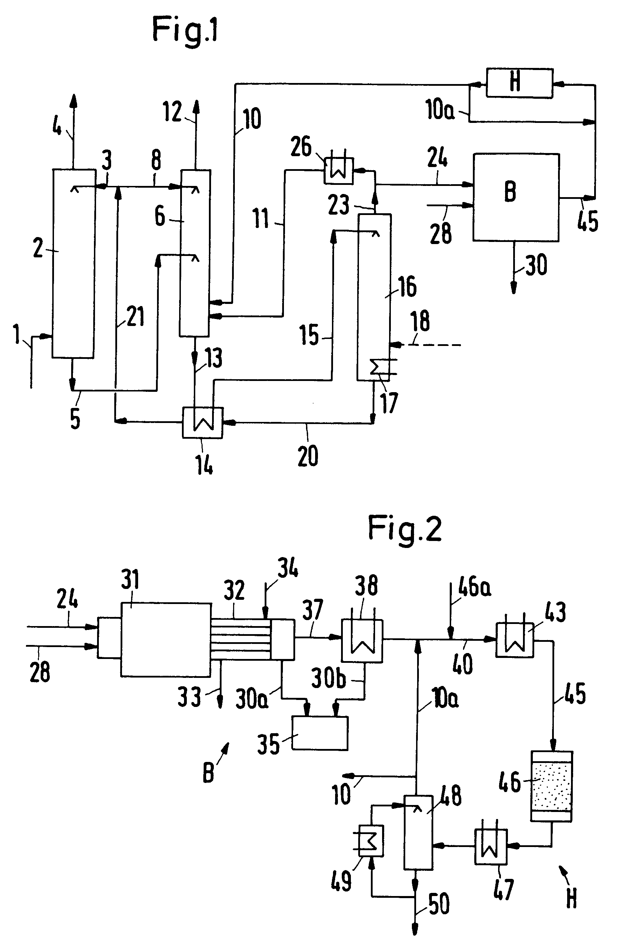

Ausgestaltungsmöglichkeiten des Verfahrens werden mit Hilfe der Zeichnung erläutert. Die Fig. 1, 3 und 4 zeigen Fließschemata zu verschiedenen Verfahrensvarianten und in Fig. 2 ist ein Beispiel für die erfindungsgemäß zu verwendende Clausanlage in vereinfachter Darstellung wiedergegeben. Pumpen und Kompressoren wurden in den Fig. der Zeichnung zur Vereinfachung und besseren Übersichtlichkeit weggelassen.

Beim Verfahren der Fig. 1 wird das zu entschwefelnde Gas in der Leitung (1) zu einer Waschzone (2) geführt, welcher man durch die Leitung (3) regenerierte Waschlösung aufgibt. Gereinigtes Gas zieht man in der Leitung (4) ab. Beladene Waschlösung, die $H_2S$ und $CO_2$ enthält, führt man in der Leitung (5) unter teilweiser Entspannung zu einem Reabsorber (6). Der Reabsorber ist eine Regenerationskolonne, die an sich bekannte Stoffaustauschelemente, z.B. flüssigkeits- und gasdurchlässige Böden, enthält. Im Reabsorber (6) wird $CO_2$ weitgehend abgetrieben, das $H_2S$ jedoch möglichst in der Waschlösung gehalten. Zu diesem Zweck gibt man am Kopf des Reabsorbers durch die Leitung (8) regenerierte Waschlösung auf, welche aus den aufsteigenden Gasen bevorzugt die Schwefelverbindungen aufnimmt. In den unteren Bereich des Reabsorbers werden $H_2S$-haltige Gase aus den Leitungen (10) und (11) zugeführt, welche im Reabsorber (6) als Strippgase wirken und vor allem $CO_2$ austreiben. Ein $CO_2$-reiches Abgas verläßt den Reabsorber durch die Leitung (12), es kann mit dem Gas der Leitung (4) für die meisten Anwendungsfälle vereinigt werden, da es weitgehend entschwefelt ist.

Die Waschlösung aus dem Reabsorber (6) gelangt in der Leitung (13) zunächst zu einem Wärmeaustauscher (14), wird dort erwärmt und strömt in der Leitung (15) zur Heißregenerierung (16). Hier sorgt ein Aufkocher (17) für die notwendige Temperaturerhöhung, um an die Waschlösung gebundene Verunreinigungen, ins-besondere $H_2S$, freizusetzen. Falls nötig, kann zusätzlich noch ein Strippgas durch die gestrichelt eingezeichnete Leitung (18) zugeführt werden. Bei diesem Strippgas kann es sich z.B. um Wasserstoff, Stickstoff oder aber um ein entschwefeltes Abgas handeln.

Regenerierte Waschlösung verläßt die Heißregenerierung (16) in der Leitung (20), wird im Wärmeaustauscher (14) gekühlt und in der Leitung (21) zurück zur Waschzone (2) und zum Reabsorber (6) geführt. $H_2S$-reiches Abgas zieht man am Kopf der Heißregenerierung (16) in der Leitung (23) ab und führt einen Teilstrom in der Leitung (24) zu einer Clausanlage, die aus einem Brennerteil (B) und einem nachgeschalteten Hydrierteil (H) besteht. Einzelheiten der aus den Teilen (B) und (H) bestehenden Clausanlage werden weiter unten mit Hilfe der Fig. 2 erläutert. Dabei wird auch erläutert, daß der Hydrierteil (H) eine Hydrierung und/oder Hydrolyse umfaßt. Restliches Abgas, das in der Leitung (23) aus der Heißregenerierung (16) kommt, wird über einen Kühler (26) und durch die Leitung (11) zum Reabsorber (6) geführt.

In Fig. 1 ist angedeutet, daß man der Clausanlage neben dem $H_2S$-reichen Abgas in der Leitung (24) durch die Leitung (28) Sauerstoff oder Luft oder mit Sauerstoff angereicherte Luft zuführt, in der Leitung (30) Elementarschwefel abzieht, durch die Leitung (45) Abgas, das $H_2S$ und $SO_2$ enthält, in den Hydrierteil (H) leitet und einen Teil des $H_2S$-haltigen Restgases aus dem Hydrierteil durch die Leitung (10a) zur Steuerung der Temperatur im Hydrierreaktor zurückführt. Die Gaswaschzone (2), der Reabsorber (6) und die Heißregenerierung (16) können an sich bekannte, den Stoffaustausch verbessernde Elemente, z.B. Böden, enthalten.

Die in Fig. 2 im einzelnen dargestellte Clausanlage, die im wesentlichen aus dem Brennerteil (B) (zwischen den Bezugsziffern (24) und (40)) und dem Hydrierteil (H) (zwischen den Bezugsziffern (45) und (50)) besteht, arbeitet folgendermaßen. Abgas der Leitung (24) zusammen mit sauerstoffhaltigem Gas, das aus der Leitung (28) kommt, wird zunächst einem Clausbrenner (31) - oder mehreren Brennern - mit integrierter Brennkammer zugeführt. Einzelheiten einer solchen Verbrennungsvorrichtung sind in der DE-A-37 35 002 sowie in der US-A-4 632 819 beschrieben. Die Verbrennung ergibt ein Gasgemisch mit Temperaturen von etwa 1000 bis 2000°C, wobei man durch Dosieren des Sauerstoffs in der Leitung (28) dafür sorgt, daß das Molverhältnis von $H_2S$ zu $SO_2$ im Gasgemisch zwischen 4:1 und 1:1 und vorzugsweise bei etwa 2:1 liegt. Im angeschlossenen indirekten Kühler (32), der mit einer Speisewasserzufuhr (34) und einer Wasserdampf-Abzugsleitung (33) versehen ist, kühlt man das Gasgemisch unter den Taupunkt des Schwefels, so daß Elementarschwefel auskondensiert. Diesen Elementarschwefel führt man in der Leitung (30a) zu einem Sammeltank (35).

Das gekühlte Gasgemisch strömt in der Leitung (37) zu einem weiteren indirekten Kühler (38), um die Ausbeute an Elementarschwefel zu verbessern. Dieser Elementarschwefel fließt durch die Leitung (30b) ebenfalls zum Tank (35). Das Gas in der Leitung (40) weist nun noch Temperaturen von etwa 125 bis 135°C auf. Zum Erhitzen führt man es durch einen indirekten Wärmeaustauscher (43). Dieses so vorgewärmte Gasgemisch gibt man mit Temperaturen von 180 bis 280°C in der Leitung (45) einer katalytischen Hydrierung (46) auf, wobei

EP 0 455 285 B1

man durch die Leitung (46a) wasserstoffhaltiges Gas zuführt, falls der in der Brennkammer (31) erzeugte Wasserstoff nicht ausreicht. Durch die Hydrierung, die auch ganz oder teilweise als Hydrolyse arbeiten kann, wird in bekannter Weise vor allem $SO_2$ zu $H_2S$ umgewandelt. Hierfür können z.B. Kobalt-Molybdän-Katalysatoren verwendet werden. Das aus der Hydrierung (46) kommende Gasgemisch wird im Kühler (47) zunächst vorgekühlt und dann einem direkten Kühler (48) aufgegeben, um Wasser zu entfernen. Der Kühler (48) arbeitet mit im Kreislauf über einen indirekten Kühler (49) geführtem Kühlwasser, überschüssiges Wasser wird in der Leitung (50) abgezogen. In der Leitung (10) verläßt $H_2S$-haltiges Restgas mit Temperaturen von etwa 20 bis 40°C den Kühler (48). Ein Teilstrom dieses Restgases führt man durch die Leitung (10a) zurück zur Hydrierung (46), um damit die Temperatur in der Hydrierung zu regeln. Die Leitungen (10a) und (46a) können auch in die Leitung (45) münden. Das Restgas in der Leitung (10) wird, wie zusammen mit den Fig. 1, 3 und 4 erläutert, weiterbehandelt.

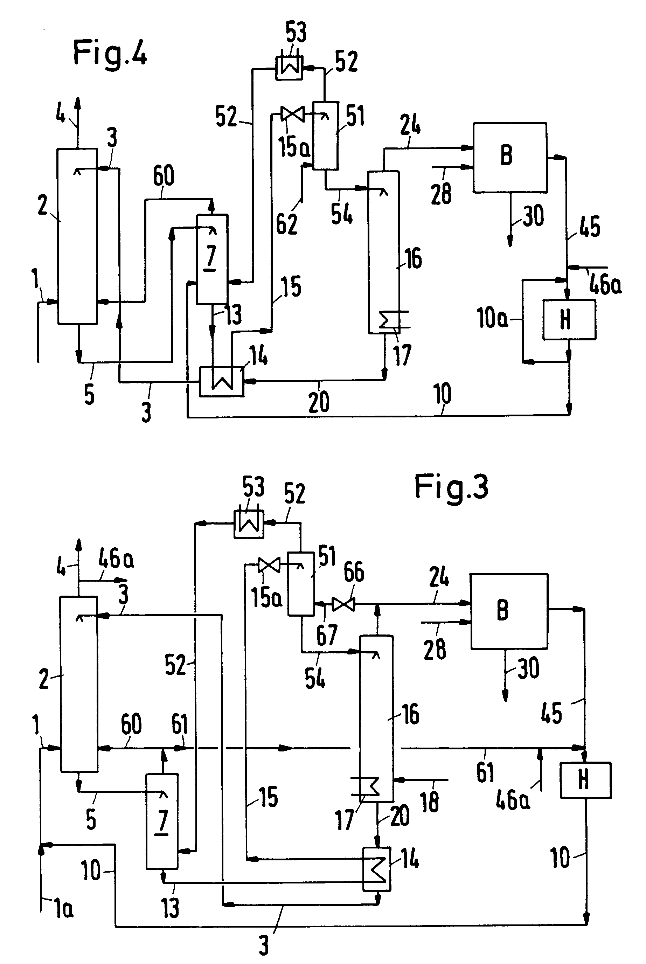

Die Verfahrensvarianten der Fig. 3 und 4 stimmen mit der Verfahrensführung der Fig. 1 teilweise überein, so daß gleiche Bezugsziffern verwendet werden und auf die zusammen mit Fig. 1 gegebenen Erläuterungen verwiesen wird. Gemäß Fig. 3 wird zu entschwefelndes Gas in der Leitung (1a) herangeführt und nach Vermischung mit dem Gas der Leitung (10) in der Leitung (1) zur Waschzone (2) geführt. Bei den Verfahren der Fig. 3 und 4 arbeitet man in der Regenerierung gleichermaßen mit zwei Regenerationskolonnen (7) und (51), in denen die Waschlösung teilweise entspannt und mit einem Strippgas behandelt wird. Das Strippgas der Kolonne (7) kommt aus der Leitung (52), es handelt sich hierbei um Abgas, das aus der Regenerationskolonne (51) kommt und durch den Kühler (53) strömt. Gemäß Fig. 3 wird das Abgas aus der Kolonne (7) durch die Leitung (60) teilweise der Waschzone (2) zugeführt, der Rest strömt durch die Leitung (61) zum Hydrierteil (H) der Clausanlage. Wasserstoffhaltiges Gas gibt man in der Leitung (46a) zu, man kann es z.B. vom Reingas der Leitung (4) abzweigen, falls dies dafür geeignet ist.

Strippgas führt man durch die Leitung (18) auch der Heißregenerierung (16) zu und ein Teil des Abgases aus der Heißregenerierung gelangt durch das Regelventil (66) und die Leitung (67) als Strippgas zur zweiten Regenerationskolonne (51). Die Waschlösung der Leitung (15) strömt durch das Entspannungsventil (15a), bevor sie in die Kolonne (51) eintritt. $H_2S$-haltiges Restgas aus dem Hydrierteil (H) wird durch die Leitung (10) dem zu reinigenden Gas in der Leitung (1) zugemischt.

In der Verfahrensführung der Fig. 4, die dem Verfahren der Fig. 3 ähnlich ist, verwendet man das $H_2S$-haltige Restgas der Leitung (10) als zusätzliches Strippgas in der ersten Regenerationskolonne (7) und gibt das Abgas dieser Kolonne durch die Leitung (60) vollständig der Gaswaschzone (2) auf. Das $H_2S$-reiche Abgas aus der Heißregenerierung (16) wird durch die Leitung (24) ganz zur Clausanlage geführt und in der zweiten Regenerationskolonne (51) verwendet man z.B. Stickstoff als Strippgas, das man in der Leitung (62) heranführt. Dem Hydrierteil (H) führt man üblicherweise aus einer Fremdquelle Wasserstoff als Hydriergas durch die Leitung (46a) zu. Möglich ist auch, einen Teilstrom des gewaschenen Gases der Leitung (4) als Hydriergas zu verwenden.

Beispiel 1

In einer Verfahrensführung gemäß Fig. 3 mit einer Clausanlage entsprechend Fig. 2 wird ein entstaubtes Produktgas aus einer Kohlevergasung mit NMP als Waschlösung behandelt. Daten zu Mengen, Drücken und Gaskomponenten in verschiedenen Leitungen geben die nachfolgenden Tabellen an. Alle Mengen, auch die der Komponenten, werden in allen Beispielen in kmol/h angegeben.

| Leitung | 1a | 4 | 5 | 10 | 60 | 61 |
|---|---|---|---|---|---|---|
| Menge | 10000 | 10039,4 | 395,7 | 192,5 | 247 | 119,9 |
| Druck (bar) | 37 | 36 | 37 | 1,1 | 1,4 | 1,4 |
| Komponenten: | | | | | | |
| $CO_2$ | 1650 | 1656,4 | 294 | 104,3 | 196,8 | 95,7 |
| $H_2S$ | 33 | – | 75 | 22,7 | 19,3 | 9,4 |
| $H_2$ | 4317 | 4314,4 | 11 | 2,8 | 7,5 | 3,5 |
| $CO$ | 4000 | 3993,6 | 15,5 | 0,4 | 10,5 | 5,0 |
| $N_2$ | – | 75 | 0,2 | 62,3 | 12,9 | 6,3 |

| Leitung | 13 | 24 | 46a | 52 | 54 | 67 |
|---|---|---|---|---|---|---|
| Menge | 124,4 | 103,8 | 4,4 | 95,6 | 65,9 | 37,1 |
| Druck (bar) | 1,5 | 1,8 | 36 | 1,6 | 1,8 | 1,8 |
| Komponenten: | | | | | | |
| $CO_2$ | 49,2 | 1,5 | 0,7 | 47,7 | 2 | 0,5 |
| $H_2S$ | 74,9 | 46,3 | – | 28,6 | 63 | 16,7 |
| $H_2$ | – | – | 1,9 | – | – | – |
| $CO$ | – | – | 1,8 | – | – | – |
| $N_2$ | 0,3 | 56 | – | 19,3 | 0,9 | 19,9 |

Als Strippgas führt man Stickstoff in einer Menge von 75 kmol/h durch die Leitung (18), durch die Leitung (28) werden 21 kmol/h an reinem Sauerstoff in die Brennkammer (31) gegeben. Die beladene Waschlösung in der Leitung (5) hat eine Temperatur von 37°C. Elementarschwefel fällt im Behälter (35) in einer Menge von 33 kmol/h an, in der Hydrierung (46) arbeitet man mit einem Kobalt-Molybdän-Katalysator mit einem Träger aus aktivierter Tonerde. Als zusätzliches Hydriergas führt man in der Leitung (46a) einen Teilstrom des Reingases der Leitung (4) heran. In der Leitung (50) werden pro Stunde 35,6 kmol Wasser mit 70°C abgezogen.

Beispiel 2

In einer Verfahrensführung nach Fig. 4 wird zusammen mit der Clausanlage der Fig. 2 ein Gas aus der Kohlevergasung behandelt und in Leitung (1) herangeführt. Als Waschlösung wird NMP verwendet, 45 kmol/h Stickstoff kommen als Strippgas aus der Leitung (62), die Verbrennung in der Brennkammer (31) erfolgt mit 12,1 kmol/h reinem $O_2$, es werden 19 kmol/h Elementarschwefel in den Behälter (35) geleitet und durch die Leitung (50) 24,2 kmol/h Wasser abgezogen. Weitere Daten sind in den nachfolgenden Tabellen enthalten (alle Mengen, auch die der Komponenten, in kmol/h).

| Leitung | 1 | 4 | 5 | 10 | 13 | 24 |
|---|---|---|---|---|---|---|
| Menge | 10000 | 10026,8 | 372,6 | 9 | 128,1 | 27,2 |
| Druck (bar) | 37 | 36 | 37 | 1,4 | 1,5 | 1,8 |
| Temperatur (°C) | 30 | 38 | 36 | 30 | 31 | |
| Komponenten: | | | | | | |
| $CO_2$ | 1650 | 1650 | 300 | – | 27 | – |
| $H_2S$ | 19 | – | 46,3 | 6,3 | 100,5 | 25,3 |
| $H_2$ + CO | 8331 | 8331,8 | 26,3 | 0,8 | – | – |
| $N_2$ | – | 45 | – | 1,9 | 0,6 | 1,9 |

| Leitung | 46a | 52 | 54 | 60 |
|---|---|---|---|---|
| Menge | 6 | 145,9 | 27,2 | 399,4 |
| Druck (bar) | 2,5 | 1,4 | 1,8 | 1,3 |
| Temperatur (°C) | 30 | 30 | | 31 |
| Komponenten: | | | | |
| $CO_2$ | – | 27 | – | 300 |
| $H_2S$ | – | 75,2 | 25,3 | 27,3 |
| $H_2$ + CO | 6 | – | – | 27,1 |
| $N_2$ | – | 43,7 | 1,9 | 45,0 |

**Patentansprüche**

1. Verfahren zum Reinigen eines brennbare Komponenten sowie Kohlendioxid und Schwefelverbindungen, insbesondere $H_2S$, enthaltenden Gases durch Waschen in einer Waschzone mit einer Waschlösung, die regeneriert und wiederverwendet wird, wobei man die Waschlösung zum Regenerieren entspannt, strippt und in einer Heißregenerierung erhitzt, ein $H_2S$-reiches Abgas aus der Heißregenerierung zu Elementarschwefel und einem $H_2S$-haltigen Restgas aufarbeitet und das Restgas mit Waschlösung in Kontakt bringt, dadurch gekennzeichnet, daß man das $H_2S$-reiche Abgas aus der Heißregenerierung in einer Brennkammer mit Sauerstoff, sauerstoffhaltigem Gas oder Luft teilweise verbrennt und in der Brennkammer ein Gasgemisch mit einer Temperatur im Bereich von 1000 bis 2000°C erzeugt, das mindestens 30 Mol-% des der Brennkammer zugeführten Schwefels als Elementarschwefel und die Komponenten $H_2S$ und $SO_2$ im Molverhältnis von 4:1 bis 1:1 enthält, daß man das Gasgemisch bis unter den Taupunkt des Schwefels kühlt, auskondensierenden Elementarschwefel abtrennt, das Gasgemisch auf Temperaturen von 180 bis 280°C erhitzt und direkt einer katalytischen Hydrierung und/oder Hydrolyse unterzieht, wobei der restliche Gehalt an $SO_2$ weitgehend in $H_2S$ umgewandelt wird, und daß man mindestens einen Teil des so behandelten Gases als $H_2S$-haltiges Restgas mit Waschlösung in Kontakt bringt.

2. Verfahren nach Anspruch 1, dadurch gekennzeichnet, daß man aus der Hydrierung und/oder Hydrolyse kommendes, $H_2S$-haltiges Restgas in die Waschzone leitet.

3. Verfahren nach Anspruch 1 oder 2, dadurch gekennzeichnet, daß man aus der Heißregenerierung ein $H_2S$-reiches Abgas mit einem $CO_2$-Gehalt von höchstens 10 Vol.-% in die Brennkammer leitet.

4. Verfahren nach Anspruch 1 oder einem der folgenden, dadurch gekennzeichnet, daß man einen Teilstrom des aus der Hydrierung und/oder Hydrolyse kommenden Restgases vor die Hydrierung oder Hydrolyse zurückführt.

5. Verfahren nach Anspruch 1 oder einem der folgenden, dadurch gekennzeichnet, daß man die Verunreinigungen enthaltende, aus der Waschzone kommende Waschlösung in einer ersten, Stoffaustauschelemente enthaltenden Regenerationskolonne teilweise entspannt und aus der ersten Regenerationskolonne ein erstes $CO_2$-haltiges Abgas abzieht, das man mindestens teilweise in die Waschzone leitet, daß man die Waschlösung aus der ersten Regenerationskolonne erwärmt, in einer zweiten, Stoffaustauschelemente enthaltenden Regenerationskolonne teilweise entspannt und teilregenerierte Waschlösung aus der zweiten Regenerationskolonne in die Heißregenerierung leitet, daß man in die zweite Regenerationskolonne ein Strippgas leitet und daß man aus der zweiten Regenerationskolonne ein zweites Abgas abzieht und als Strippgas in die erste Regenerationskolonne leitet.

6. Verfahren nach Anspruch 5, dadurch gekennzeichnet, daß man aus der Hydrierung und/oder Hydrolyse kommendes, $H_2S$-haltiges Restgas als Strippgas in die zweite Regenerationskolonne leitet.

7. Verfahren nach Anspruch 5, dadurch gekennzeichnet, daß man stickstoffhaltiges Gas als Strippgas in die Heißregenerierung leitet und einen Teilstrom des Abgases aus der Heißregenerierung der zweiten Regenerationskolonne als Strippgas zuführt.

8. Verfahren nach Anspruch 5, dadurch gekennzeichnet, daß man aus der Hydrierung und/oder Hydrolyse kommendes, $H_2S$-haltiges Restgas als Strippgas in die erste Regenerationskolonne leitet.

9. Verfahren nach Anspruch 1 oder einem der folgenden, dadurch gekennzeichnet, daß man einen Teil des aus der Hydrierung und/oder Hydrolyse kommenden, $H_2S$-haltigen Restgases in die Brennkammer leitet.

10. Verfahren nach Anspruch 5 oder einem der folgenden, dadurch gekennzeichnet, daß man einen Teilstrom des aus der ersten Regenerationskolonne kommenden ersten Abgases der katalytischen Hydrierung und/oder Hydrolyse zuführt.

11. Verfahren nach Anspruch 1 oder einem der folgenden, dadurch gekennzeichnet, daß man 30 bis 80 % des Schwefels, der in dem der Brennkammer zugeführten Abgas enthalten ist, als Elementarschwefel gewinnt.

12. Verfahren nach Anspruch 1 oder einem der folgenden, dadurch gekennzeichnet, daß man das aus der

EP 0 455 285 B1

Waschzone abgezogene gereinigte Gas einem Gas- und Dampfturbinen-Kraftwerk zuführt.

**Claims**

1. A process for purifying a gas containing combustible components as well as carbon dioxide and sulphur compounds, especially $H_2S$, by washing in a washing zone with a washing solution, which is regenerated and reused, for regeneration the washing solution being expanded, stripped and heated in hot regeneration, an $H_2S$-rich waste gas from the hot regeneration being reprocessed into elementary sulphur and an $H_2S$-containing residual gas and the residual gas being brought into contact with washing solution, characterized in that the $H_2S$-rich waste gas from the hot regeneration is partially burned in a combustion chamber with oxygen, oxygen-containing gas or air and a gas mixture is generated in the combustion chamber at a temperature in the range of from 1000 to 2000°C, which mixture contains at least 30 mole percent of the sulphur supplied to the combustion chamber as elementary sulphur and the components $H_2S$ and $SO_2$ in a molar ratio of from 4:1 to 1:1, in that the gas mixture is cooled to below the dew point of the sulphur, condensing-out elementary sulphur is separated, the gas mixture is heated to temperatures of from 180 to 280°C and subjected directly to catalytic hydrogenation and/or hydrolysis, the remaining $SO_2$ content being extensively converted into $H_2S$, and in that at least part of the gas thus treated is brought into contact with washing solution as $H_2S$-containing residual gas.

2. A process according to claim 1, characterized in that $H_2S$-containing residual gas coming from the hydrogenation and/or hydrolysis is conveyed into the washing zone.

3. A process according to claim 1 or claim 2, characterized in that an $H_2S$-rich waste gas with a $CO_2$-content of at most 10 % by volume is conveyed from the hot regeneration into the combustion chamber.

4. A process according to claim 1 or any of the subsequent claims, characterized in that a partial stream of the residual gas coming from the hydrogenation and/or hydrolysis is conveyed back in front of the dydrogenantion or hydrolysis.

5. A process according to claim 1 or any of the subsequent claims, characterized in that the washing solution containing the impurities and coming from the washing zone is partially expanded in a first regeneration column containing material exchanging members and a first $CO_2$-containing waste gas is drawn off from the first regeneration column, which first $CO_2$-containing waste gas is conveyed at least partially into the washing zone, in that the washing solution from the first regeneration column is heated and partially expanded in a second regeneration column containing material exchanging members, and partially regenerated washing solution is conveyed from the second regeneration column into hot regeneration, in that a stripping gas is conveyed into the second regeneration column and in that a second waste gas is drawn off from the second regeneration column and conveyed as a stripping gas into the first regeneration column.

6. A process according to claim 5, characterized in that $H_2S$-containing residual gas coming from hydrogenation and/or hydrolysis is conveyed as a stripping gas into the second regeneration column.

7. A process according to claim 5, characterized in that nitrogen-containing gas is conveyed into the hot regeneration as a stripping gas and a partial stream of the waste gas from the hot regeneration is supplied to the second regeneration column as a stripping gas.

8. A process according to claim 5, characterized in that $H_2S$-containing residual gas coming from hydrogenation and/or hydrolysis is conveyed as a stripping gas into the first regeneration column.

9. A process according to claim 1 or any of the subsequent claims, characterized in that part of the $H_2S$-containing residual gas coming from hydrogenation and/or hydrolysis is conveyed into the combustion chamber.

10. A process according to claim 5 or any of the subsequent claims, characterized in that a partial stream of the first waste gas coming from the first regeneration column is supplied to catalytic hydrogenation and/or hydrolysis.

7

**11.** A process according to claim 1 or any of the subsequent claims, characterized in that 30 to 80 % of the sulphur, which is contained in the waste gas supplied to the combustion chamber, is recovered as elementary sulphur.

**12.** A process according to claim 1 or any of the subsequent claims, characterized in that the purified gas drawn off from the washing zone is supplied to a gas and steam turbine power station.


**Revendications**

**1.** Procédé d'épuration d'un gaz contenant des constituants combustibles ainsi que du dioxyde de carbone et des composés soufrés, notamment $H_2S$, par lavage dans une zone de lavage par une solution de lavage qui est régénérée et qui est réutilisée, qui consiste, pour régénérer la solution de lavage, à la détendre, à lui faire subir une séparation par entraînement et à la chauffer dans une régénération à chaud, à transformer du gaz riche en $H_2S$ sortant de la régénération à chaud en soufre élémentaire et en un gaz résiduel contenant du $H_2S$ et à mettre le gaz résiduel en contact avec de la solution de lavage, caractérisé en ce qu'il consiste à brûler partiellement le gaz qui sort de la régénération à chaud et qui est riche en $H_2S$ dans une chambre de combustion, par de l'oxygène, par du gaz contenant de l'oxygène ou par de l'air, et à produire dans la chambre de combustion un mélange gazeux ayant une température de l'ordre de 1000 à 2000°C, qui contient au moins 30 % en mole du soufre envoyé à la chambre de combustion sous forme de soufre élémentaire et les constituants $H_2S$ et $SO_2$ dans le rapport molaire de 4:1 à 1:1, à refroidir le mélange gazeux jusqu'en-dessous du point de rosée du soufre, à séparer le soufre élémentaire qui s'est condensé, à porter le mélange gazeux à des températures de 180 à 280°C et à le soumettre directement à une hydrogénation catalytique et/ou à une hydrolyse, la teneur résiduelle en $SO_2$ étant transformée pour l'essentiel en $H_2S$ et à mettre au moins une partie du gaz ainsi traitée, sous forme de gaz résiduel contenant du $H_2S$, en contact avec de la solution de lavage.

**2.** Procédé suivant la revendication 1, caractérisé en ce qu'il consiste à envoyer à la zone de lavage le gaz résiduel contenant du $H_2S$ et provenant de l'hydrogénation et/ou de l'hydrolyse.

**3.** Procédé suivant la revendication 1 ou 2, caractérisé en ce qu'il consiste à envoyer de la régénération à chaud à la chambre de combustion un gaz riche en $H_2S$ ayant une teneur en $CO_2$ de 10 % en volume au plus.

**4.** Procédé suivant la revendication 1 ou l'une des suivantes, caractérisé en ce qu'il consiste à retourner un courant partiel du gaz résiduel provenant de l'hydrogénation et/ou de l'hydrolyse en amont de l'hydrogénation ou de l'hydrolyse.

**5.** Procédé suivant la revendication 1 ou l'une des suivantes, caractérisé en ce qu'il consiste à détendre partiellement la solution de lavage qui contient les impuretés qui proviennent de la zone de lavage dans une première colonne de régénération contenant des éléments de transfert de matière et à soutirer de la première colonne de régénération un premier gaz contenant du $CO_2$, que l'on envoie au moins en partie à la zone de lavage, à réchauffer la solution de lavage provenant de la première colonne de régénération, à la détendre partiellement dans une deuxième colonne de régénération contenant des éléments de transfert de matière, et à envoyer la solution de lavage, régénérée partiellement, de la deuxième colonne de régénération à la régénération à chaud, à envoyer, dans la deuxième colonne de régénération, un gaz d'entraînement et à soutirer, de la deuxième colonne de régénération, un deuxième gaz et à l'envoyer, comme gaz d'entraînement, à la première colonne de régénération.

**6.** Procédé suivant la revendication 5, caractérisé en ce qu'il consiste à envoyer du gaz résiduel contenant du $H_2S$ et provenant de l'hydrogénation et/ou de l'hydrolyse comme gaz d'entraînement, à la deuxième colonne de régénération.

**7.** Procédé suivant la revendication 5, caractérisé en ce qu'il consiste à envoyer du gaz contenant de l'azote comme gaz d'entraînement à la régénération à chaud et à envoyer un courant partiel du gaz provenant de la régénération à chaud à la deuxième colonne de régénération en tant que gaz d'entraînement.

**8.** Procédé suivant la revendication 5, caractérisé en ce qu'il consiste à envoyer du gaz résiduel contenant du $H_2S$ et provenant de l'hydrogénation et/ou de l'hydrolyse, en tant que gaz d'entraînement, à la première colonne de régénération.

9.  Procédé suivant la revendication 1 ou l'une des suivantes, caractérisé en ce qu'il consiste à envoyer, à la chambre de combustion, une partie du- gaz résiduel contenant du $H_2S$ et provenant de l'hydrogénation et/ou de l'hydrolyse.

10.  Procédé suivant la revendication 5 ou l'une des suivantes, caractérisé en ce qu'il consiste à envoyer à l'hydrogénation catalytique et/ou à l'hydrolyse un courant partiel du premier gaz sortant de la première colonne de régénération.

11.  Procédé suivant la revendication 1 ou l'une des suivantes, caractérisé en ce qu'il consiste à recueillir, sous forme de soufre élémentaire, de 30 à 80 % du soufre qui est contenu dans le gaz envoyé à la chambre de combustion.

12.  Procédé suivant la revendication 1 ou l'une des suivantes, caractérisé en ce qu'il consiste à envoyer, à une centrale électrique à turbine à gaz et à vapeur, le gaz épuré soutiré de la zone de lavage.

## Fig.1

## Fig.2

Fig.4

Fig.3